# EUROPEAN PATENT SPECIFICATION

(11) **EP 1 058 201 B1**
(45) Date of publication and mention of the grant of the patent: **18.02.2004**
(21) Application number: 99830332.5
(22) Date of filing: 31.05.1999
(51) Int. Cl.: G06K 1/12

(54) **Method and apparatus for printing coded marks on identification plates for cables and electrical equipment**
Verfahren und Vorrichtung zum Drucken von kodierten Markierungen auf Kennzeichnungsschildern für Kabel und für elektrische Geräte
Méthode et dispostif d'impression de marques codées sur des plaquettes d'identification de câbles et de composants électriques

(43) Date of publication of application: 06.12.2000
(73) Proprietor: GENERAL MARKING S.R.L., 25135 Brescia (BS) (IT)
(72) Inventor: Boesi, Giorgio, 24100 Bergamo (IT)
(74) Representative: Tansini, Elio Fabrizio

(56) References cited:
- EP-A- 0 833 276
- WO-A-93/10506
- DE-A- 3 907 415
- FR-A- 2 668 657
- PATENT ABSTRACTS OF JAPAN vol. 1995, no. 03, 28 April 1995 (1995-04-28) & JP 06 337948 A (TORAY IND INC), 6 December 1994 (1994-12-06)
- PATENT ABSTRACTS OF JAPAN vol. 1995, no. 01, 28 February 1995 (1995-02-28) & JP 06 286239 A (SATO:KK), 11 October 1994 (1994-10-11)

## Description

The present invention relates to a method for printing coded marks on identification plates for cables and electrical equipment.

The invention further relates to an apparatus for implementing the aforementioned method.

In the realisation of electrical systems, particularly in buildings or on industrial machinery, the technique is known of associating to electrical cables, as well as to electrical equipment such as switches, remote switches, terminals and the like, appropriate coded marks that allow easily to identify the wiring to facilitate subsequent checking operations and/or new wiring, for instance when conducting maintenance and/or repairs.

In many cases, such marks or identification codes are shown on small plastic tags which are engaged to the cables or the electrical equipment by means of containment sheaths made of transparent material and/or by means of other kinds of latching or engagement elements.

The tags are normally realised by means of an injection moulding phase. More specifically, with a single injection moulding phase at least one card is produced with substantially planar conformation, comprising at least a moulding blank whereto, by means of frangible portions, is attached a plurality of plates suitable to be individually detached, as needed, by breaking the respective frangible portion.

The coded marks are written on the plates at a subsequent time, by means of a plotter essentially comprising at least a nib movable on two orthogonal axes above a table whereon the card is positioned, as disclosed in FR-A-2 668 657. The operation of the plotter is controlled by an electronic computer wherein the working program for writing the coded marks on the individual plates is stored.

For more than two decades. i.e. since the methods for writing coded marks with the aid of the plotter have been marketed, great efforts have been made to seek to improve the efficiency of the plotter, particularly in terms of writing speed and working precision. To provide an indication of the results attained so far, it is noted that printing six character alphanumeric codes on a card containing 59 plates sized 4 x 15 mm is completed in the order of 6 minutes.

In this circumstance, within the scope of the realisation of the plates specified above, the use of plotters has always been deemed satisfactory and indispensable for writing the codes in an automated, versatile, sufficiently fast and precise manner.

All this stated, the Applicant has tackled the problem of applying to the plates also chromatic marks, e.g. comprising alphanumeric characters on a coloured background with one or more colours, and/or bar codes currently exceeding the capabilities of plotters. Hence it has been observed that by replacing writing methods by plotter with hot ink transfer or sublimation printing methods, the problem described above can be solved, obtaining a surprising increase in versatility and flexibility in the type or marks that can be placed on the plates.

It has further been noted that the times required to place the coded marks on the plates can be drastically reduced, to values which so far had been unthinkable if, instead to the conventional method of writing with the aid of a plotter, a printing method by hot ink transfer or sublimation is adopted.

Moreover, it has been found that the methods of printing by means of hot ink transfer or sublimation on the plates of the kind specified above, can unexpectedly be realised using peripheral printing units of the kind disclosed in DE-A-3 907 415 and already present on the market, though employed for purposes and in sectors that are completely different from the one whereto the present invention is aimed, without necessarily requiring extensive modifications and/or the realisation of peripheral units specifically designed and built for the realisation of said identification plates.

In particular, the subject of the present invention is a method for printing coded marks on identification plates for cables and electrical equipment, as defined in claim 1.

Yet another subject of the present invention is an apparatus for printing coded marks on identification plates for cables and electrical equipment as defined in claim 7.

Further features and advantages of the invention shall be made more readily apparent from the content of the detailed description of some preferred, but not exclusive, embodiment of an apparatus for printing coded marks on identification plates for cables and electrical equipment, according to the present invention.

The description shall be made below with reference to the accompanying drawings, provided purely by way of non limiting indication, wherein:
- Figure 1 shows a perspective view of a peripheral printing unit usable to realise the printing method in accordance with the present invention;
- Figure 2 schematically shows a longitudinal section of the peripheral printing unit highlighting the path followed by the card for purposes of reproducing coded marks on its printable surface;
- Figure 3 shows a plan view of a card bearing a plurality of plates to be printed by means of the method according to the invention;
- Figure 4 shows a plan view of a further embodiment of a card bearing a plurality of plates to be printed by means of the method according to the invention;
- Figure 5 shows a cross section view of a card engaged to a support template usable for purposes of executing the printing process;
- Figure 6 shows a cross section of a further embodiment of a card engaged to a support template;
- Figure 7 schematically shows a calendering unit for the hot transfer of coded marks on the card bearing the plates, in accordance with a second embodiment of the apparatus according to the invention.

With reference to the mentioned figures, the number 1 indicates in its entirety an apparatus for printing coded marks on identification plates of cables and electrical equipment, according to the present invention.

The plates 2 destined to be treated by means of the apparatus 1 are preferably made of rigid or semi-rigid material, with hardness preferably no lower than 40 Shore D, for instance polycarbonate, PVC, or polyamide, injection moulded. The plates 2 are mutually connected to form, altogether, a card 3 of substantially quadrangular planar shape. More specifically, the plates 2 are joined to one or more moulding blanks 4, each by means of one or more frangible portions 2a, 2b which allow their easy detachment at the moment when, in a way known in itself, the individual plates are to be applied to respective cables and/or electrical equipment.

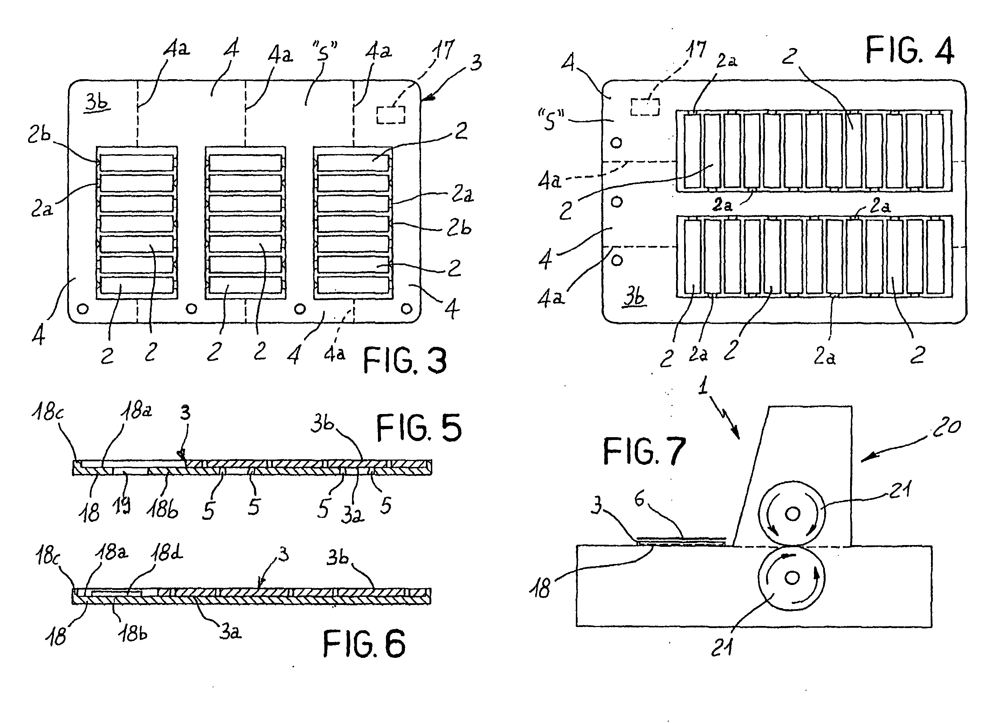

As shown in Figures 3 and 4, the card 3 can also be provided with one or more pre-breaking notches 4a to allow the mutual separation of the blanks 4 with respective plates 2 thereby facilitating their employment. Alternatively to injection moulding, the card 3 with the plates 2 can be obtained by means of a carving operation by die cutting, milling blanking or with laser beam, performed on a planar sheet of plastic or plastic-coated material, obtained for instance by calendering.

In accordance with a preferential embodiment, shown in Figure 3, each plate 2 is connected at respectively opposite parts to two blanks 4, respectively by means of a primary frangible portion 2a and an auxiliary frangible portion 2b. Fastening each plate 2 by means of both its extremities to the card 3 ensures the positioning stability of the plate itself during the subsequent printing phase of the coded marks. The auxiliary frangible portions 2b present smaller dimensions than the primary frangible portions 2a and follow one another in alternating sequence with respect thereto. In this way, after the mutual detachment of two adj acent blanks 4 only the secondary frangible portions 2b will break, and to each of the blanks 4 will remain fastened only the plates 2 connected thereto by means of the primary frangible portion 2a, set in alternating sequence with respect to the plates belonging to the other blank.

All this having been stated, the card 3 essentially presents a base surface 3a which can be substantially planar (Figure 6) or provided with engagement projections 5 (Figure 5) able to allow to facilitate the connection of the single plates 2 to the respective cables and/or electrical equipment.

To the side opposite the base surface 3a, the card 3 presents a substantially planar surface to be printed 3b, in correspondence with which can be printed the identification codes on the individual plates 2.

In accordance with the present invention, printing the identification codes on the card 2 essentially entails approaching to the surface to be printed 3b of the card 3 at least a ribbon shaped support 6 on at least one surface thereof, preferably oriented towards the surface to be printed 3b, is transferred at least a layer of ink substantially composed of pigments mixed in appropriate waxes of resins. The ink, or at least the pigments contained therein, are stably joined to the ribbon shaped support 6 at ambient temperature, or in any case at temperatures indicatively below 70-80°C.

The ribbon shaped support 6 and the plates 2 mutually approached are then subjected to a heating phase whereupon the ink, or at least its pigments, separate from the ribbon shaped support and are transferred on the plates 2 which, at least in correspondence with the surface to be printed 3a, in the meantime have reached such a temperature as to favour the intimate union of the pigments between the molecules that make up the plastic material constituting the plates themselves.

For example, with plates 2 made of PVC the phase whereby the ink is transferred by heat, described above, can take place at a temperature indicatively ranging between 100 and 250°C.

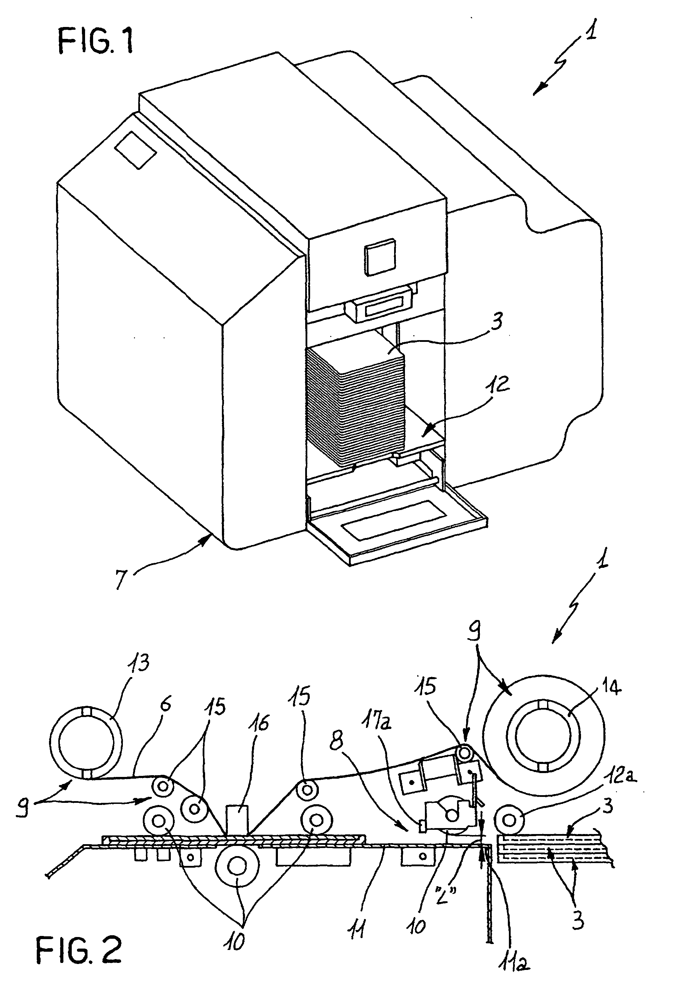

In accordance with a preferential embodiment of the invention, the subject method is suitable to be implemented by means of a peripheral printing unit, indicated in its entirety with the number 7 in Figure 1, and more in detail a printing unit that operates by hot ink transfer and/or sublimation of the type usable to print graphic designs on credit cards and/or similar magnetic cards.

In this circumstance, it may be advantageously provided for the card 3 to present the same shape and equal, or at least no smaller, dimensions than those of a conventional credit card.

The peripheral printing unit 7 essentially comprises first and second positioning means 8, 9 set to act respectively on the card 3 and on the ribbon shaped support 6 to position them in mutually approached relation, as described above. More specifically, the first positioning means 8 preferably comprise first motor driven rollers 10 set to act on the individual cards 3 to make them advance individually along sliding guides 11 provided in the peripheral printing unit 7. A feeding assembly 12 can be provided in proximity to an inlet end 11a of the sliding guide 11 to thrust constantly upwards a stack of cards 3 to be printed, thereby assuring its contact with an auxiliary feeding roller 12a.

The second positioning means 9 in turn comprise at least a motor driven collection drum 13 able to be actuated in rotation to wind the ribbon shaped support 6, made in the form of continuous ribbon coming from a feeding drum 14. After the actuation in rotation of the collection drum 13, the ribbon shaped support 6 is driven longitudinally over a series of idle transmission rollers 15 which guide it according to a pre-determined path passing underneath a print head 16. Underneath the print head, the ribbon shaped support 6 acts in contact relationship against the surface to be printed 3a of the card 3.

A certain contact pressure between the ribbon 6 and the card 3 is guaranteed by an elastic pre-load transmitted to the print head 16.

The print head 16 acts as a pre-heating unit set to interact on punctiform portions of the mutually approached surfaces of the ribbon shaped support 6 and of the card 3. In this way, the transfer of the ink, distributed in the form of a uniform layer over the entire surface of the ribbon shaped support 6, takes place according to the punctiform portions subjected to heating by the print head 16. The entire operation of the peripheral printing unit 7 is controlled by an electronic computer (not show herein), such as a personal computer, according to a stored program containing all the data of the coded marks to be printed on the individual plates 2, in such a way as to reproduce the marks of each individual plate by means of a sequence of mutually juxtaposed points, each corresponding to one of the punctiform portions wherein the localised heating of the surfaces of the ribbon 6 and of the card 3 is determined.

In addition to the use of monochromatic inked ribbons, the ribbon shaped support 6 can advantageously present, on its longitudinal development, two or more superficial portions bearing respectively different inks, in order to obtain any colour during the printing phase. More in detail, along the ribbon shaped support 6 can be provided a series of segments each comprising a sequence of five longitudinally consecutive superficial portions, that is to say three portions respectively bearing inks of three different colours, i.e. cyan, magenta and yellow, as well as a portion with black ink and a portion with clear scratch-proof protective ink. When executing the printing process for a single card 3, the phases of approaching the ribbon and heating according to punctiform portions are sequentially repeated involving, on each occasion, the superficial portion of the ribbon bearing the ink of a pre-determined colour, situated underneath the print head 16 and moved together with the card 3 upon the action of the second positioning means 9 operating in synchrony with the first positioning means 8.

More in particular, each superficial portion of the ribbon 6, bearing the respective type of ink, preferably presents a longitudinal extension that is substantially equal to the dimension measurable on the card 3 in the direction of advance along the sliding guides 11, so that the printing operation executed on this portion of the ribbon shaped support 6 can involve the whole extension of the printable surface 3b of the card itself. Once the print of a colour is complete, the motor driven rollers 10 take the card 3 with its front end in proximity to the print head 16, to start printing the following colour, also provided in correspondence with the print head 16 by means of the second positioning means 9.

Thus it is possible to print, on the individual plates 2, any type of coded mark, be it alphanumeric, chromatic or with bar codes.

Advantageously, on the card 3, and in particular in correspondence with the blanks 4, a free area "S" can be provided, suitable for receiving auxiliary graphic designs, comprising for instance the mark of the company supplying the cards and/or additional coded marks. The reproduction of such auxiliary graphic designs and/or coded marks can be effected by the same peripheral printing unit 7, while at the same time printing the coded marks on the individual plates 2.

In correspondence with the free area "S" can also be provided at least a bar code, or a magnetic insert, or a hologram or other type of identifying seal 17, able to be associated to the card 3 simultaneously with or immediately after the injection moulding phase whereby the card itself is realised. This seal 17 can be identified by suitable sensor means 17a, not described herein as they are obtainable in a manner known in itself, associated to the peripheral printing unit 7 and operating, for instance, along sliding guides 11 or anyway positioned in a manner suitable for recognising the presence of the seal on the card 3. The sensor means 17a function in such a way as to enable the operation of the print head 16 and, hence, the execution of the heating phase described above, as well as the operation of the positioning means 8, 9, only upon the detection of the identifying seal 17 on the card itself. This allows to avoid printing identification marks on unauthorised cards.

Alternatively, the identifying seal 17 can be associated to a package containing a predetermined number of cards, or to the first card in a card lot. In this case, the sensor means 17a associated with the peripheral printing unit 7 can enable, upon identification of the aforementioned seal, the operation of the print head 16 for a number of work cycles equal to the number of cards contained in the lot or in the package whereto the seal is associated.

Before the execution of the printing operation, the card can advantageously be subjected to a preliminary phase wherein it is coupled with a support template 18 (Figures 5 and 6) presenting a coupling side 18a oriented towards the base surface 3a of the card itself, and a substantially planar base side 18b, oriented opposite to the coupling side 18a.

As shown in Figure 5, at least on the coupling side 18a can be obtained appropriate seats 19 for housing possible engagement projections 5 provided on the base surface 3a of the card 3. In this situation, the use of the support template 18 allows to prevent the presence of the engagement projections 5 from requiring the provision of suitable grooves along the sliding guides 11 and/or on the motor driven rollers 10 dedicated to moving the card 3 within the peripheral printing unit 7. Moreover, support templates 18 can be realised that are suitable to house cards 3 equipped with different types of engagement projections 5, thereby allowing to treat any kind of card 3 without requiring a modification on the peripheral printing unit 7.

The support template 18 can also present a peripheral edge 18c that projects with respect to the coupling side 18a according to a height equal to or slightly smaller than the thickness of the card 3. The peripheral edge 18c is suited to act against the peripheral edges of the card 3 to ensure its stable positioning with respect to the support template. In addition or alternatively to the peripheral edge 17c, ribs 18d can be provided, projecting from the coupling side 18a to be interposed between respectively adjacent plates 2 and thereby fix the positioning of the card 3 on the template 18.

The dimensions of the support template 18, particularly in relation to its own thickness measured between the coupling side 18a and the base side 18b, are such that the sum of the thickness of the support template itself and of the card 3 is substantially equal, or anyway not greater than, the dimension of a clearance "L" defined in the peripheral printing unit 7, and more specifically between the sliding guides 11 and the motor driven rollers 10, to allow the passage of the card.

Also when using a card 3 having planar base surface 3a, i.e. lacking engagement projections 5, a support template 18 can be employed to obtain an overall thickness that is equal to the dimension of the clearance.

In accordance with another possible embodiment of the invention, the ribbon shaped support 6, realised in the manner of a sheet (7) or continuous form, is inked by means of a peripheral print unit (not shown) for instance of the ink jet, laser, or other kind, in such a way as to reproduce on the ribbon shaped support itself the coded marks to be printed on the plates 2. Inking the ribbon shaped support can entail the use of two or more different types of ink to obtain alphanumeric and/or chromatic and/or bar code marks of any kind, as well as possible reproductions of graphic designs and/or marks on the free areas "S" provided in the cards 3.

The inked ribbon shaped support, which can present dimensions corresponding to those of one or more cards 3 coplanarly positioned one next to the other, is superimposed to the surfaces to be printed 3b of the cards 3, then effecting the heating phase necessary to transfer the ink, or its pigments, from the ribbon shaped support to the cards themselves. In this embodiment, the heating phase is effected simultaneously and homogeneously over the entire transverse and/or longitudinal extension of the mutually approached surfaces of the ribbon shaped support 6 and of said one or more cards 3.

In accordance with said embodiment, the first positioning means can comprise at least one support template 18 for one or more cards 3, similar to the one described above with reference to Figures 5 and 6, whilst the second positioning means 9 can for instance comprise a frame (not shown) for the engagement of the ribbon shaped support which can be coupled to the support template 18 in such a way as to ensure the correct mutual positioning between the ribbon shaped support and the cards 3. Alternatively, the ribbon shaped support 6 can be positioned manually, exploiting the visual reference provided by the presence of the marks printed on the ribbon shaped support itself.

The thermal transfer of the ink can be accomplished with the aid of a heating unit comprising for instance a calendering unit 20 having one or more opposite rollers 21, heated by electrical resistors and able to be actuated in rotation, between which the ribbon shaped support 6 coupled to the card 3 is made to pass as described above.

Alternatively, the calendering unit 20 can be replaced by a plate heated by electrical resistors and movable towards the card or cards 3, to thrust against them the inked ribbon shaped support 6.

The present invention attains important advantages.

As described above, the print operation effected by means of hot ink transfer allows to print not only alphanumeric, but also chromatic coded marks on the plates.

The high printing quality, particularly in terms of definition, also allows to print complex codes, for instance bar codes.

It is also possible to print alphanumeric and/or bar codes superimposed on chromatic codes.

The increase in operational versatility brought on by the method and the apparatus in accordance with the present invention is thus readily apparent; it is also paired with an unexpected increase in the operating versatility of the identification plates of the kind whereto the present invention is specifically aimed.

The invention further allows to reduce the time required to print the coded marks on the plates, down to values that were unthinkable in the prior art. It should be noted that when using an ink sublimation peripheral printing unit the time required to complete the monochromatic print of one card, containing for instance 21 cards, is about 5-8 seconds. Advantageously, this printing time is also substantially unchanged even after an increase in the number of plates, of smaller size, provided in the individual card, and/or after an increase in the number of alphanumeric characters and/or of chromatic codes to be printed on individual plates.

The fact should be stressed that execution of the printing operation in such limited times was unthinkable in the prior art which, employing plotters, required at least 2-3 minutes to execute the same kind of work process.

The invention also enables to print on the cards graphic designs such as marks or other indications independent from the coded marks printed on the plates, without thereby entailing any increase in work cycle times.

Yet another advantage attained by the invention consists of a greater reliability in the execution of the printing operation which, with conventional plotters, was prone to frequent interruptions due to malfunctions in the nibs used in plotters. These malfunctions were also due to the need to use particular inks with highly volatile solvents in order to guarantee the indelibility of the markings.

## Claims

1. Method for printing coded marks on identification plates for cables and electrical equipment, said plates (2) being mutually connected by means of frangible portions (2a, 2b) to form a substantially planar card (3), presenting a surface to be printed (3b) opposite to a base surface (3a),
said method comprising the following steps:
a preliminary step of coupling the card (3) to a support template (18) presenting a coupling side (18a) oriented towards the base surface (3a) of the card and a substantially planar base side (18b) oriented opposite to the coupling side (18a);
bringing the surface to be printed (3b) of said card (3) into a contact relationship with a ribbon shaped support (6) bearing at least a layer of ink; and
heating at least one portion of the ribbon shaped support (6) and the plate (2) which are in said contact relationship to transfer the ink from the ribbon (6) to the plate (2).

2. Method- according to claim 1, further comprising a preliminary step of identifying the card (3) and enabling the heating step once identification has taken place.

3. Method according to claim 2, wherein the heating step is enabled for a number of cycles equal to the number of cards comprised in a lot.

4. Method according to claim 1, wherein the ribbon shaped support (6) presents at least one layer of ink umformly distributed on at least one of its opposite surfaces, said heating step being effected according to punctiform portions of the contacting surfaces of the ribbon (6) and of the card (3), by means of a print head (16) comprised in a peripheral printing unit (7) controlled by an electronic computer.

5. Method according to claim 1, wherein the bringing and heating steps are sequentially repeated at least two successive times, involving two different portions of the ribbon shaped support (6) bearing respectively different inks.

6. Method according to claim 1, wherein the ribbon shaped support (6) is inked by means of a peripheral printing unit controlled by an electronic computer to reproduce on the support itself the coded marks to be printed on the plates (2), said heating step being effected simultaneously and homogeneously on the entire transverse and/or longitudinal extension of the contacting surfaces of said ribbon shaped support (6) and of said card (3).

7. Apparatus for printing coded markings on identification plates for cables and electrical equipment, said plates (2) being mutually connected by means of frangible portions (2a, 2b) to form a substantially planar card (3), presenting a surface to be printed (3b) opposite to a base surface (3a), said apparatus comprising:
a support template (18) to which the card (3) is coupled, the support template (18) presenting a coupling side (18a) oriented towards the base surface (3a) of the card (3) itself and a substantially planar base side (18b);
first means (8) for positioning said card (3);
second positioning means (9) operating on a ribbon shaped support (6) bearing at least a layer of ink on at least one of its surfaces to place the ribbon shaped support (6) in a contact relationship with the surface to be printed (3b) of the card (3); and
a heating unit (16) able to operate on the contacting surfaces of the ribbon shaped support (6) and of the card (3) to transfer the ink from the ribbon shaped support (6) to the card (3).

8. Apparatus according to claim 7, wherein said support template (18) presents housing seats (19) for respective engagement projections (5) protruding from the base surface (3a) of the card (3).

9. Apparatus according to claim 7, wherein said card (3) and said support template (18) present an overall thickness that is equal to a passage clearance (L) defined by first positioning means (8), through which the card (3) is driven together with the support template (18).

10. Apparatus according to claim 7, further comprising sensor means (17a) to detect the presence of at least an identification seal (17) associated to said card (3) and enable the operation of the heating unit (16) upon said detection.

11. Apparatus according to claim 10, wherein said identification seal (17) is associated with a lot of cards (3), said sensor means (17a) being able to enable the operation of the heating unit (16) for the number of work cycles equal to the number of cards (3) contained in said lot.

12. Apparatus according to claim 7 wherein said heating unit comprises a print head (16) able to heat according to punctiform portions the contacting surfaces of said ribbon shaped support (6) and of said card (3), said ribbon shaped support (6) presenting at least a layer of ink uniformly distributed on at least one of its surfaces.

13. Apparatus according to claim 12 wherein said first and second positioning means (8, 9) and said heating unit (16) are comprised in a peripheral printing unit (7) controlled by an electronic computer.

14. Apparatus according to claim 12 wherein said ribbon shaped support (6) .comprises at least two superficial portions bearing respectively different inks, said second positioning means (9) being able to place said superficial portions individually and selectively in positions contacting the surface to be printed (3b) of the card (3).

15. Apparatus according to claim 13 wherein said peripheral printing unit (7) is an ink sublimation printing unit usable to print credit cards.

16. Apparatus according to claim 7, wherein said heating unit camprises a calendering unit comprising at least a heated roller able to act on said nbbon shaped support (6) coupled to the card (3).

17. Apparatus according to claim 16, wherein said ribbon shaped support comprises at least one sheet bearing the coded marks to be printed on the plates.

## Patentansprüche

1. Verfahren zum Drucken von kodierten Markierungen auf Kennzeichnungsschildern für Kabel und für elektrische Geräte, wobei die Kennzeichnungsschilder (2) miteinander über Sollbruchstellen (2a, 2b) zur Bildung einer im wesentlichen ebenen Karte (3) verbunden sind, die eine druckbare, zu einer Basisfläche (3a) abgewandte Fläche (3b) aufweist,
wobei das Verfahren folgende Schritte umfasst:
- einen Vorschritt zum Kuppeln der Karte (3) an eine Tragschablone (18), die eine in Richtung der Basisfläche (3a) der Karte gerichtete Kuppelseite (18a) und eine im wesentlichen ebene, der Kuppelseite (18a) abgewandten Basisseite (18b) aufweist;
- in Kontakt bringen der zu bedruckenden Fläche (3b) der Karte (3) mit einem bandförmigen Träger (6), der mindestens eine Farbschicht trägt; und
- Erhitzen mindestens eines Abschnittes des bandförmigen Trägers (6) und des Kennzeichnungsschildes (6), die sich miteinander berühren, um die Farbe vom Band (6) auf das Kennzeichnungsschild (2) zu übertragen.

2. Verfahren nach Anspruch 1, umfassend überdies eine Vorphase zur Erkennung der Karte (3) und die Befähigung des Erhitzungsschrittes nach erfolgter Erkennung.

3. Verfahren nach Anspruch 2, bei dem der Erhitzungsschritt für eine Anzahl von Arbeitsgängen gleich der Anzahl von Karten befähigt wird, die Teil einer Losmenge sind.

4. Verfahren nach Anspruch 1, bei dem der bandförmige Träger (6) mindestens eine Farbschicht aufweist, die auf mindestens einer ihrer entgegengesetzten Flächen gleichförmig verteilt ist, wobei der Erhitzungsschritt gemäß punktförmigen Stellen der sich in Berührung befindlichen Flächen des Bandes (6) und der Karte (3) über einen Druckkopf (16) durchgeführt wird, der einer peripheren Druckeinheit (7) angehört, die von einer elektronischen Verarbeitungseinheit gesteuert wird.

5. Verfahren nach Anspruch 1, bei dem die Schritte zum in Kontaktbringen und Erhitzen in Reihenfolge mindestens für zwei nacheinanderfolgende Male wiederholt werden, wobei verschiedene bandförmige Trägerabschnitte beansprucht werden, die jeweils verschiedene Farben tragen.

6. Verfahren nach Anspruch 1, bei dem der bandförmige Träger (6) über eine periphere Druckeinheit eingefärbt wird, die durch ein elektronisches Verarbeitungsgerät gesteuert wird, um am Träger selbst die auf den Kennzeichnungsschildern (2) zu druckenden, kodierten Markierungen aufzutragen, wobei der Erhitzungsschritt simultan und gleichförmig auf der gesamten Querund/oder Längsausdehnung der sich in Kontakt befindlichen, bandförmigen Trägerflächen (6) und der Karte (3) ausgeführt wird.

7. Vorrichtung zum Drucken von kodierten Markierungen auf Kennzeichnungsschildern für Kabel und für elektrische Geräte, wobei die Kennzeichnungsschilder (2) miteinander über Sollbruchstellen (2a, 2b) zur Bildung einer im wesentlichen ebenen Karte (3) verbunden sind, die eine druckbare, zu einer Basisfläche (3a) äbgewandte Fläche (3b) aufweist, wobei die Vorrichtung umfasst:
- eine Tragschablone (18), mit der die Karte (3) gekoppelt ist, wobei die Schablone (18) eine zur Basisfläche (3a) der Karte (3) gerichtete Kuppelseite und eine im wesentlichen ebene Basisseite (18b) aufweist;
- erste Positioniermittel (8) der Karte (3);
- zweite Positioniermittel (9), die auf einen bandförmigen Träger (6) wirken, der mindestens eine Farbschicht auf mindestens einer seiner Flächen trägt, um den bandförmigen Träger (6) mit der druckbaren Fläche (3b) der Karte (3) in Berührung zu bringen; und
- eine Heizeinheit (16), die bereitgestellt ist, auf die Kontaktflächen des bandförmigen Trägers (6) und der Karte (3) zu wirken, um die Farbe vom bandförmigen Träger (6) auf die Karte (3) zu übertragen.

8. Vorrichtung nach Anspruch 7, bei der die Tragschablone (18) Aufnahmesitze (19) für entsprechende Eingriffsansätze (5) aufweist, die von der Basisfläche (3a) der Karte (3) vorspringen.

9. Vorrichtung nach Anspruch 7, bei der die Karte (3) und die Tragschablone (18) eine Gesamtstärke aufweisen, die gleich der lichten Durchgangsweite (L) ist, die durch die ersten Positioniermittel (8) festgelegt ist, und durch welche die Karte (3) zusammen mit der Tragschablone (18) hindurchbewegt wird.

10. Vorrichtung nach Anspruch 7, umfassend überdies Fühler (17a) zum Erfassen der Anwesenheit mindestes eines der Karte (3) zugeordneten Identifizierungsstempels (17) und zum Befähigen des Betriebes der Heizeinheit (16) zufolge der Erfassung.

11. Vorrichtung nach Anspruch 10, bei welcher der Identifizierungsstempel (17) einer Kartenlosmenge (3) zugeordnet ist, wobei die Fühlermittel (17a) bereitgestellt sind, den Betrieb der Heizeinheit (16) für eine Anzahl von Arbeitsabläufen gleich der Anzahl von in dieser Losgröße enthaltenen Karten (3) zu befähigen.

12. Vorrichtung nach Anspruch 7, bei der die Heizeinheit einen Druckkopf (16) umfasst, der bereitgestellt ist, gemäß punktförmigen Stellen die sich berührenden Flächen des bandförmigen Trägers (6) und der Karte (3) zu erhitzen, wobei der bandförmige Träger (6) mindestens eine Farbschicht aufweist, die auf mindestens einer ihrer Flächen gleichförmig verteilt ist.

13. Vorrichtung nach Anspruch 12, bei der die ersten und zweiten Positioniermittel (8, 9) und die Heizeinheit (16) einer peripheren Druckeinheit (7) angehören, die von einem elektronisches Verarbeitungsgerät gesteuert wird.

14. Vorrichtung nach Anspruch 13, bei welcher der bandförmige Träger (6) mindestens zwei Oberflächenabschnitte umfasst, die jeweils verschiedene Farben tragen, wobei die zweiten Positioniermittel (9) bereitgestellt sind, die Oberflächenabschnitte einzeln und wahlweise in Positionen in Berührung mit der zu druckenden Fläche (3b) der Karte (3) zu setzen.

15. Vorrichtung nach Anspruch 13, bei der die periphere Druckeinheit (7) eine Farbsublimationsdruckeinheit ist, die zum Drucken von Kreditkarten verwendbar ist.

16. Vorrichtung nach Anspruch 7, bei der die Heizeinheit eine Kalandereinheit umfasst, die mindestens eine Heizwalze umfasst, die bereitgestellt ist, auf den mit der Karte (3) gekoppelten bandförmigen Träger (6) zu wirken.

17. Vorrichtung nach Anspruch 16, bei welcher der bandförmige Träger mindestens einen Bogen umfasst, der die kodierten auf den Kennzeichnungsschildern zu druckenden Markierungen umfasst.

## Revendications

1. Méthode d'impression de marques codées sur des plaquettes d'identification de câbles et de composants électriques, lesdites plaquettes (2) étant reliées les unes aux autres par des portions cassantes (2a, 2b) à former une carte essentiellement plate (3) présentant une surface à imprimer (3b) opposée à la surface de base (3a),
ladite méthode comprenant les étapes suivantes:
- une étape préliminaire prévoyant l'accouplement de la carte (3) à un gabarit support (18) présentant un côté d'accouplement (18a) orienté vers la surface de base (3a) de la carte et un côté de base sensiblement plat (18b) orienté à l'opposé du côté d'accouplement (18a);
- mise de la surface à imprimer (3b) de ladite carte (3) en relation de contact avec un support en forme de ruban (6) portant au moins une couche d'encre; et
- chauffage d'au moins une portion du support en forme de ruban (6) et de la plaquette (2) qui sont en relation de contact pour transférer l'encre du ruban (6) à la plaquette (2).

2. Méthode selon la revendication 1, comprenant en outre une étape préliminaire d'identification de la carte (3) et d'autorisation de l'étape de chauffage dès que l'identification a eu lieu.

3. Méthode selon la revendication 2, dans laquelle l'étape de chauffage est autorisée pour un nombre de cycles égal au nombre de cartes comprises dans un lot.

4. Méthode selon la revendication 1, dans laquelle le support en forme de ruban (6) présente au moins une couche d'encre distribuée de manière uniforme sur au moins une de ses surfaces opposées, ladite étape de chauffage étant effectuée suivant des portions ponctuelles des surfaces de contact du ruban (6) et de la carte (3), par une tête d'impression (16) comprise dans une unité périphérique d'impression (7) contrôlée par un ordinateur électronique.

5. Méthode selon la revendication 1, dans laquelle les étapes de mise en contact et de chauffage sont répétées de manière séquentielle au moins deux fois en succession, impliquant deux portions différentes du support en forme de ruban (6) portant deux encres respectivement différentes.

6. Méthode selon la revendication 1, dans laquelle le support en forme de ruban (6) est encré par une unité périphérique d'impression contrôlée par un ordinateur électronique pour reproduire sur le support lui-même les marques codées à imprimer sur les plaquettes (2), ladite étape de chauffage étant effectuée en même temps et de manière homogène sur toute l'étendue transversale et/ou longitudinale des surfaces de contact dudit support en forme de ruban (6) et de ladite carte (3).

7. Dispositif d'impression de marques codées sur des plaquettes d'identification de câbles et de composants électriques, lesdites plaquettes (2) étant reliées les unes aux autres par des portions cassantes (a, 2b) à former une carte essentiellement plate (3) présentant une surface à imprimer (3b) à l'opposé d'une surface de base (3a), ledit dispositif comprenant:
- un gabarit support (18) auquel est accouplée la carte (3), le gabarit support (18) présentant un côté d'accouplement (18a) orienté vers la surface de base (3a) de la carte (3) et un côté de base sensiblement plat (18b) ;
- des premiers moyens (8) de positionnement de ladite carte (3);
- des deuxièmes moyens de positionnement (9) opérant sur un support en forme de ruban (6) portant au moins une couche d'encre sur au moins une de ses surfaces pour mettre le support en forme de ruban (6) en relation de contact avec la surface à imprimer (3b) de la carte (3); et
- une unité de chauffage (16) en mesure d'opérer sur les surfaces en contact du support en forme de ruban (6) et de la carte (3) pour transférer l'encre du support en forme de ruban (6) à la carte (3).

8. Dispositif selon la revendication 7, dans lequel ledit gabarit support (18) présente des sièges de logement (19) pour des ressauts d'engagement respectifs (5) faisant saillie de la surface de base (3a) de la carte (3).

9. Dispositif selon la revendication 7, dans lequel ladite carte (3) et ledit gabarit support (18) présentent une épaisseur totale qui est égale à une lumière de passage (L) définie par des premiers moyens de positionnement (8), à travers laquelle la carte (3) est mue ensemble avec le gabarit support (18).

10. Dispositif selon la revendication 7, comprenant en outre des moyens capteurs (17a) pour détecter la présence d'au moins un sceau d'identification (17) associé à ladite carte (3) et autoriser le fonctionnement de ladite unité de chauffage (16) à la suite de ladite détection.

11. Dispositif selon la revendication 10, dans lequel ledit sceau d'identification (17) est associé à un lot de cartes (3), lesdits moyens capteurs (17a) étant en mesure d'autoriser le fonctionnement de l'unité de chauffage (16) pour un nombre de cycles de travail égal au nombre des cartes (3) contenues dans ledit lot.

12. Dispositif selon la revendication 7, dans lequel ladite unité de chauffage comporte une tête d'impression (16) en mesure de chauffer selon des portions ponctuelles les surfaces en contact dudit support en forme de ruban (6) et de ladite carte (3), ledit support en forme de ruban (6) présentant au moins une couche d'encre distribuée de manière uniforme sur l'une au moins de ses surfaces.

13. Dispositif selon la revendication 12, dans lequel lesdits premiers et deuxièmes moyens de positionnement (8, 9) et ladite unité de chauffage (16) sont compris dans une unité d'impression périphérique (7) contrôlée par un ordinateur électronique.

14. Dispositif selon la revendication 12, dans lequel ledit support en forme de ruban (6) comporte au moins deux portions de surface portant des encres respectivement différentes, lesdits deuxièmes moyens de positionnement (9) étant en mesure de placer lesdites portions de surface de manière individuelle et sélective à des positions en contact avec la surface à imprimer (3b) de la carte (3).

15. Dispositif selon la revendication 13, dans lequel ladite unité périphérique d'impression (7) est une unité d'impression à sublimation d'encre utilisable pour imprimer des cartes de crédit.

16. Dispositif selon la revendication 7, dans lequel ladite unité de chauffage comporte une unité de calandrage comprenant au moins un rouleau chauffé apte à agir sur ledit support en forme de ruban (6) accouplé à la carte (3).

17. Dispositif selon la revendication 16, dans lequel ledit support en forme de ruban comporte au moins une feuille portant les marques codées à imprimer sur les plaquettes.
